(19) Europäisches Patentamt
European Patent Office
Office européen des brevets

(11) **EP 3 947 800 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **20713601.1**

(22) Anmeldetag: **23.03.2020**

(51) Internationale Patentklassifikation (IPC):
**D04H 1/425** (2012.01)    **D01F 2/28** (2006.01)
**D04H 1/4391** (2012.01)    **D04H 1/64** (2012.01)
**D04H 3/005** (2012.01)    **D04H 3/018** (2012.01)
**D04H 3/12** (2006.01)    **E04B 1/76** (2006.01)
**E04B 1/78** (2006.01)

(52) Gemeinsame Patentklassifikation (CPC):
**D04H 1/425; D01D 5/24; D01F 1/10; D01F 2/28; D04H 1/43914; D04H 1/64; D04H 3/005; D04H 3/018; D04H 3/12; E04B 1/76; Y02A 30/244**

(86) Internationale Anmeldenummer:
**PCT/EP2020/057949**

(87) Internationale Veröffentlichungsnummer:
**WO 2020/200873 (08.10.2020 Gazette 2020/41)**

(54) **ISOLIERMATERIAL, VERFAHREN ZUR HERSTELLUNG EINES SOLCHEN ISOLIERMATERIALS SOWIE VERWENDUNG EINES SOLCHEN ISOLIERMATERIALS**

INSULATION MATERIAL, METHOD FOR PRODUCING SUCH AN INSULATION MATERIAL, AND USE OF SUCH AN INSULATION MATERIAL

MATÉRIAU ISOLANT, PROCÉDÉ DE FABRICATION D'UN TEL MATÉRIAU ISOLANT ET UTILISATION D'UN TEL MATÉRIAU ISOLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2019 DE 102019108691**

(43) Veröffentlichungstag der Anmeldung:
**09.02.2022 Patentblatt 2022/06**

(73) Patentinhaber: **Cerdia International GmbH**
**4052 Basel (CH)**

(72) Erfinder:
• **MOSER, Martin**
**79215 Elzach (DE)**

• **MANN, Dieter**
**79254 Oberried (DE)**
• **SCHÄFFNER, Uwe**
**79279 Vörstetten (DE)**

(74) Vertreter: **Meissner Bolte Partnerschaft mbB Patentanwälte Rechtsanwälte**
**Postfach 10 26 05**
**86016 Augsburg (DE)**

(56) Entgegenhaltungen:
**EP-A2- 0 634 113**    **DE-U1-202004 004 228**
**US-A- 1 876 130**    **US-A- 3 044 914**

**Beschreibung**

Die vorliegende Erfindung betrifft ein neuartiges Isoliermaterial gemäß dem Oberbegriff von Anspruch 1. Das Isoliermaterial ist ein Isoliermaterial insbesondere in Gestalt von Matten, die mit oder ohne Kaschierung beispielsweise zwischen Dachsparren eingesetzt werden können, oder in Gestalt von Stopfwolle bzw. in Gestalt von geschnittenen Stapelfasern zum Einblasen in Formen oder Hohlräume.

Obgleich die vorliegende Erfindung keine Konstruktionselemente betrifft, würde sich das neuartige Isoliermaterial auch grundsätzlich für die Herstellung von Konstruktionselementen eignen, die beispielsweise in Gestalt von insbesondere sandwichartig aufgebaute Dämmpaneele oder in Gestalt von insbesondere sandwichartig aufgebauten Fassadenplatten ausgeführt sind.

Darüber hinaus betrifft die Erfindung die Verwendung eines solchen Isoliermaterials Isoliermaterial zur thermischen Isolierung von Gebäudewänden und/oder Gebäudedächer. Hierzu kann das Isoliermaterial insbesondere in Gestalt von Isoliermatten oder in Gestalt von einblasbare Stopfwolle oder Stapelfasern vorliegen. Das Isoliermaterial gemäß der Erfindung eignet sich insbesondere zur thermischen Isolierung von Gebäudefassaden und kann als Isoliermaterial eines flächenhaft ausgedehnten Wärmedämmverbundsystems zur thermischen Isolierung von Wandflächen eines Gebäudes dienen.

Die Druckschrift US 1,876,130 A betrifft ein Verfahren zur Herstellung von hohlen Kunstseidenfilamenten mit geringem Glanz.

Die Druckschrift US 3,044,914 A betrifft faseriges Wärmedämmmaterial.

Die Druckschrift DE 20 2004 004 228 U1 betrifft ebenfalls einen Wärmedämmstoff mit Celluloseacetatfasern.

Die Druckschrift EP 0 634 113 A2 betrifft einen Zigarettenfilter aus Celluloseacetat sowie ein Verfahren zur Herstellung eines solchen Filters.

In Dämmpaneele verwendete Isoliermaterialien für den Einsatz im Baubereich, insbesondere zur Dacheindeckung und Fassadenbekleidung, sind allgemein aus dem Stand der Technik bekannt. Derartige Dämmmaterialien beruhen in der Regel auf einem Polyurethanschaum, der als Dämmschicht sandwichartig zwischen zwei Außenplatten aus Blech oder PVC aufgenommen ist.

Beispielsweise wird ein Dämmpaneel der zuvor genannten Art in der Druckschrift WO 2004/009929 A1 beschrieben. Das aus diesem Stand der Technik bekannte Paneel besteht aus einem Paar sandwichartig gebundener Bleche mit dazwischenliegender Dämmschicht.

Weite Verbreitung gefunden haben ferner sogenannte Wärmedämmverbundsysteme, die zum außenseitigen Dämmen von Gebäudeaußenwänden verwendet werden. In der Regel bedeckt ein Wärmedämmverbundsystem die gesamte Außenwandfläche eines Gebäudes mit Ausnahme der Dachflächen und dient dazu, den Wärmeübergang vom Innenraum des Gebäudes in die Umwelt und umgekehrt zu minimieren.

Bekannte Wärmedämmverbundsysteme sind in der Regel mehrlagig aufgebaut. Eine erste flächenhaft ausgedehnte Lage mit einem niedrigen Wärmedurchgangskoeffizient U wird unmittelbar an der Gebäudeaußenfläche angebracht, beispielsweise unter Zuhilfenahme mechanischer Verankerungsmittel oder mittels Verklebung. Diese Lage ist dabei in der Regel aus einer Vielzahl einzelner Platten beispielsweise rechteckigen Zuschnitts zusammengefügt. Die Platten bestehen oftmals aus organischen synthetischen Werkstoffen wie geschäumten Kunststoffen, oder aus anorganischen Werkstoffen wie Mineralwolle oder Mineralschäumen.

Auf die außenliegende Oberfläche der auf die Außenfläche des Gebäudes aufgebrachten Dämmplatten wird nachfolgend häufig eine Armierungslage aufgebracht, da die Dämmplatten in der Regel nur eine unzureichende mechanische Stabilität aufweisen. Diese Armierungslage besteht in der Regel aus einem Armierungsmörtel, der als Unterputz verwendet wird, in dem dann ein Armierungsgewebe, in der Regel ein Kunstfasergewebe eingebettet wird. Auf die Armierungslage kann dann oberseitig als abschließende Lage ein Außenputz aufgebracht. Die Oberfläche des Außenputzes kann zusätzlich noch gestrichen werden und bildet diejenige Schicht des Wärmedämmverbundsystems, welche eine möglichst hohe Bewitterungsresistenz aufweist.

Weiterhin ist es aus der Bautechnik allgemein bekannt, Dämmmaterialien in Gestalt von Matten, wie beispielsweise Stein- oder Glaswollematten, zur Wärmedämmung von Gebäuden einzusetzen.

Obwohl die aus dem Stand der Technik vorbekannten Wärmedämmmaterialien unter thermischen Gesichtspunkten bereits als vorteilhaft anzusehen sind, so weisen sie dennoch erhebliche ökologische Nachteile auf. Insbesondere wird erwartet, dass der Rückbau, das Recycling und die Verwertung insbesondere der in derzeit verbauten Wärmedämm-Verbundsystemen zum Einsatz kommenden Wärmedämmmaterialien in der Zukunft erhebliche Entsorgungsprobleme mit sich bringen.

Dieses Thema war aufgrund der überraschend langen Lebensdauer der in der Regel auf Polyurethanschaum oder Polystyrol basierenden Wärmedämmmaterialien aus der ersten Generation bislang nicht weiter thematisiert, da die aktuellen Rücklaufmengen noch relativ gering sind. Allerdings ist in der nahen Zukunft zu erwarten, dass die zu verwertenden Mengen von alten Wärmedämmmaterialien mit der bestehenden Infrastruktur etwa von Müllheizkraftwerken möglicherweise nicht mehr beherrschbar sind.

Im Hinblick auf Stein- oder Glaswolle, die gelegentlich auch zur Wärmedämmung von Gebäuden eingesetzt wird, ist zusätzlich als Nachteil anzusehen, dass diese Dämmmaterialien bei deren Verarbeitung unangenehme und auch gesundheitlich bedenkliche Nebenwirkungen zeigen, da auf Stein- oder Glasfasern basierende Dämmmaterialien aus feinen langen Fasern bestehen, die auch in die Lunge geraten können. Deshalb ist bei der Verarbeitung derartiger Dämmmaterialien immer mindestens ein Mundschutz zu tragen, und insbesondere am besten auch ein Schutzanzug, da die Fasern auf der Haut stark jucken. Darüber hinaus ist die Entsorgung von auf Stein- oder Glasfasern basierende Dämmmaterialien ebenfalls nicht unproblematisch, da sich diese Dämmmaterialien ebenfalls nicht oder zumindest nicht ohne weiteres auf natürliche Weise zersetzen. Insbesondere ist eine Entsorgung dieser Dämmmaterialien im normalen Hausmüll gesetzlich nicht zulässig.

Auf Grundlage dieser Problemstellung liegt der Erfindung die Aufgabe zugrunde, ein Isoliermaterial zur thermischen Isolierung (Dämmung) insbesondere von Gebäuden anzugeben, wobei bei der Herstellung dem Rückbau, dem Recycling und der Verwertung von diesem Isoliermaterial die bestehenden Nachhaltigkeitsdefizite ausgeräumt oder zumindest deutlich verringert werden können.

Insbesondere soll die Ökoeffektivität oder Ökoeffizienz des Isoliermaterials deutlich verbessert werden im Vergleich zu herkömmlichen Isoliermaterialien, wie beispielsweise Polyurethanschaum oder anderen geschäumten Kunststoffmaterialien, wie beispielsweise Polyurethan, Polystyrol-Extruderschaum, geschäumtes Polypropylen oder geschäumtes Polyethylen.

Diese Aufgabe wird insbesondere durch den Gegenstand des unabhängigen Patentanspruches 1 gelöst, welcher ein Isoliermaterial insbesondere in Gestalt von Matten, die mit oder ohne Kaschierung beispielsweise zwischen Dachsparren eingesetzt werden können, oder in Gestalt von Stopfwolle bzw. in Gestalt von geschnittenen Stapelfasern zum Einblasen in Formen oder Hohlräume betrifft, wobei das Isoliermaterial als Röhrchenverbundstruktur ausgeführt ist, die rohrförmige Celluloseacetatfilamente aufweist.

Die mit der erfindungsgemäßen Lösung erzielbaren Vorteile liegen auf der Hand: indem als Isoliermaterial Celluloseacetatfilamente verwendet werden, wird ein vollständig biokompatibles und bioabbaubares Isoliermaterial bereitgestellt. Das erfindungsgemäße Isoliermaterial ist im Prinzip so abbaubar, wie beispielsweise Holz, wobei allerdings durch die Röhrchenverbundstruktur eine optimale Wärmedämmung erzielbar ist. Versuche haben gezeigt, dass mit dem erfindungsgemäßen Isoliermaterial U-Werte erzielbar sind, die vergleichbar mit den entsprechenden Werten der heute gängigen Dämmmaterialien sind.

Insbesondere beträgt der Hohlanteil in der Röhrchenverbundstruktur 25 % bis 90 % und vorzugsweise 50 % bis 80 % beträgt. Dieser Hohlanteil liefert einen entscheidenden Beitrag zu der erzielbaren isolierenden Wirkung, was nur aufgrund der hohlen Fasern der Röhrchenverbundstruktur erzielbar ist, nicht aber bei geschlossenen Filamenten bzw. bei üblichen (Stein- etc.) Wollen, Naturfasern oder synthetischen Fasern.

Der Hohlanteil entspricht dabei dem Verhältnis von "hohler" Fläche zur "gesamten" Fläche der Fasern.

In diesem Zusammenhang ist zu erwähnen, dass sich das erfindungsgemäße Isoliermaterial dadurch von den aus dem Stand der Technik bekannten Isolier- oder Dämmmaterialien auch dadurch unterscheidet, dass der Filamentdurchmesser der Celluloseacetatfilamente deutlich größer ist, als der Filamentdurchmesser anderer (synthetischer) Hohlfasern ist, deren Filamentdurchmesser im Bereich zwischen 10 und 50 $\mu m$ liegt. Im Unterschied hierzu liegt der Filamentdurchmesser der hohlen Celluloseacetatfilamente im Bereich zwischen 50 bis 150 $\mu m$, und vorzugsweise zwischen 60 bis 100 $\mu m$ (Außendurchmesser). Auf diese Weise kann der Hohlanteil und somit die spezifische thermische Dämmwirkung des erfindungsgemäßen Isoliermaterials deutlich erhöht werden.

Darüber hinaus zeichnet sich das erfindungsgemäße Isoliermaterial dadurch aus, dass - insbesondere wenn keine flammenschutztechnischen Maßnahmen vorzusehen sind - dieses nahezu chemikalienfrei ausgeführt sein kann, ohne dadurch Verschlechterungen des Wärmedämmwertes in Kauf zu nehmen. Celluloseacetatfilamente, wie sie für die Röhrchenverbundstruktur des erfindungsgemäßen Isoliermateriales zum Einsatz kommen, sind bereits beispielsweise aus der Zigarettenindustrie für Zigarettenfilter bekannt. Dieses Material (Celluloseacetat) ist gesundheitlich vollkommen unbedenklich.

Als weiterer Vorteil ist zu nennen, dass das erfindungsgemäße Isoliermaterial mit bereits existierenden Anlagen zur Produktion von Filter-Tow-Material produziert werden kann. Somit sind für die Herstellung des Isoliermateriales keine erhöhten Kosten zu erwarten, so dass das Isoliermaterial selber relativ einfach herstellbar ist.

Zur Herstellung des Isoliermateriales wird zunächst ein Tow-Material aus gekräuselten Endlos-Celluloseacetatfilamenten bereitgestellt. Dieses Tow-Material wird anschließend aufgebauscht, und zwar beispielsweise nach dem gleichen Prinzip, wie es in so genannten Filterstabmaschinen erfolgt. Alternativ hierzu kann das Tow-Material aber auch mit Druckluft aufgebauscht werden, sollte eine Filterstabmaschine nicht zur Verfügung stehen. Alternativ kann das Tow-Material definiert verstreckt werden, wobei im Anschluss daran das verstreckte Material relaxiert. Anschließend werden die Celluloseacetatfilamente des aufgebauschten Tow-Materials mit Hilfe eines Weichmachers, insbesondere Triacetin, vernetzt. In einem letzten Verfahrensschritt werden entsprechende Faserblöcke aus dem vernetzten Tow-Material ausgeformt.

Im Hinblick auf die Röhrchenverbundstruktur des erfindungsgemäßen Isoliermateriales ist gemäß Ausführungsformen vorgesehen, dass diese rohrförmige und gekräuselte Endlos-Celluloseacetatfilamente aufweist. Allerdings ist die Erfindung nicht auf Endlos-Celluloseacetatfilamente beschränkt; vielmehr wurde herausgefunden, dass ebenfalls eine hervorragende Wärmedämmung erzielbar ist, wenn die Röhrchenverbundstruktur rohrförmige, gekräuselte und geschnittene Endlos-Celluloseacetatfilamente aufweist.

Um die biologische Abbaubarkeit des erfindungsgemäßen Isoliermateriales zu verbessern, und zwar unter der Einwirkung von Umgebungseinflüssen, ist gemäß Ausführungsformen der erfindungsgemäßen Lösung vorgesehen, dass die aus Celluloseacetatfilamenten aufgebaute Röhrchenverbundstruktur einen Zusatzstoff aufweist, welcher vorzugsweise zumindest bereichsweise auf der Oberfläche der Celluloseacetatfilamente aufgebracht ist, wobei dieser Zusatzstoff aus einer stickstoffhaltigen, organischen Verbindung besteht, bei deren Abbau durch Mikroorganismen basische Zersetzungsprodukte, insbesondere Ammoniak und/oder basische Verbindungen, die eine NH-Gruppe oder NH-Gruppen und/oder eine $NH_2$-Gruppe oder $NH_2$-Gruppen aufweisen, entstehen.

Bevorzugt ist die stickstoffhaltige, organische Verbindung Harnstoff oder ein Harnstoffderivat. Diese Substanzen sind deshalb bevorzugt, da sie gesundheitlich und insbesondere auch lebensmittelrechtlich unbedenklich und in großen Mengen unter einem akzeptablen Preis verfügbar sind.

Bevorzugt besteht die stickstoffhaltige, organische Verbindung auch aus einem Protein, wobei ganz besonders bevorzugt das Beta-Lactoglobulin ist. Auch Proteine sind aus gesundheitlicher Hinsicht unbedenklich, und für das Beta-Lactoglobulin gilt, dass es bei der Käseherstellung in großen Mengen als industriell wenig genutztes Nebenprodukt anfällt.

Ferner ist es bevorzugt, dass die stickstoffhaltige, organische Verbindung ein Kondensationsprodukt aus einem Aldehyd mit Ammoniak oder mit einem Amin ist, wobei dieses Kondensationsprodukt ganz besonders bevorzugt Hexamethylentetramin ist.

Schließlich ist es bevorzugt, dass die stickstoffhaltige, organische Verbindung eine zyklische Verbindung, insbesondere Carbazol, ist. Selbstverständlich können jedoch auch andere stickstoffhaltige, organische Verbindungen eingesetzt werden, wobei man jedoch darauf achten sollte, dass diese möglichst nicht toxisch sind.

Eine erhöhte biologische Abbaugeschwindigkeit kann aber auch dadurch erzielt werden, indem die aus Celluloseacetatfilamenten aufgebaute Röhrchenverbundstruktur a) feinst verteilte Partikel einer biologisch abbaubaren, wasserlöslichen, organischen Komponente und b) feinst verteilte Partikel einer wasserlöslichen, das Wachstum von Mikroorganismen fördernden, N-, P- und/oder S-enthaltenden anorganischen Komponente enthält.

Beispielsweise kann die aus Celluloseacetatfilamenten aufgebaute Röhrchenverbundstruktur feinst verteilte Partikel aufweisen, die auf einem wasserlöslichen Saccharid und/oder einer wasserlöslichen organischen Säure beruhen. Das wasserlösliche Saccharid kann Saccharose, Glukose, Maltose und/oder Laktose darstellen. Die wasserlösliche organische Säure kann Oxalsäure, Malonsäure, Glutarsäure, Adipinsäure, Hydrooxycarbonsäuren, insbesondere Milchsäure, Äpfelsäure, Weinsäure, Zitronensäure und/oder Ascorbinsäure und/oder Aminocarbonsäuren, darstellen.

Alternativ oder zusätzlich hierzu kann die aus Celluloseacetatfilamenten aufgebaute Röhrchenverbundstruktur feinst verteilte Partikel aufweisen, die eine wasserlösliche organische Stickstoffverbindung und/oder eine wasserlösliche organische Phosphorverbindung darstellt. Die wasserlösliche organische Stickstoffverbindung kann Harnstoff, Guardinin, Hexamethylentetraamin, Glycin und/oder Alanin sein.

Die feinst verteilten Partikel weisen vorzugsweise eine mittlere Teilchengröße von weniger als etwa 10 $\mu$m, insbesondere weniger als etwa 5 $\mu$m auf.

Die feinst verteilte Partikel einer wasserlöslichen, das Wachstum von Mikroorganismen fördernden, N-, P- und/oder S-enthaltenden anorganischen Komponente können in Form von Cl-, K-, Mg, Ca- und/oder Fe-haltigen Salzen vorliegen. Beispielsweise können die Salze in Form von $Na(NH_4)_2PO_4$, $NaH_2PO_4$, $Na_2SO_4$, $(NH_4)_2SO_4$, $NH_4NO_3$, $NaNO_3$, $MgSO_4$, $KH_2PO_4$, $FeSO_4$ und/oder $NH_4Cl$ einzeln oder in Mischung vorliegen.

Gemäß Ausführungsformen können als Zusatzstoff bedarfsweise auch Flammschutzmittel zum Einsatz kommen.

Gemäß Realisierungen des erfindungsgemäßen Isoliermateriales ist vorgesehen, dass die aus den Celluloseacetatfilamenten geformte Röhrchenverbundstruktur aus einem acetonlöslichen Celluloseacetat mit einer Acetylzahl von weniger als 60 %, vorzugsweise einer Acetylzahl zwischen 55 % und 57 % bestehen. Damit ist sichergestellt, dass die dem biologischen Abbau vorausgehende Hydrolyse des Celluloseacetates in kürzerer Zeit vonstattengeht.

Das Tow-Material, welches als Ausgangspunkt zur Herstellung des erfindungsgemäßen Isoliermateriales dient, kann ungekräuselt sein (Kräuselindex 0). Obgleich mit einem Kräuselindex von 0 % das Material nicht aufbauschbar ist, kann das ungekräuselte Material in dünnen, flächigen Schichten zum Einsatz kommen.

Bevorzugt weist das Tow-Material, welches als Ausgangspunkt zur Herstellung des erfindungsgemäßen Isoliermateriales dient, jedoch einen Kräuselindex auf, welcher bei 10 bis 40% und vorzugsweise bei 20 bis 30 % liegt.

Auf diese Weise wird eine optimale Vernetzung der Celluloseacetatfilamente erreicht, wobei gleichzeitig von der Röhrchenverbundstruktur ein relativ hoher Luftanteil eingeschlossen wird, welcher für eine optimale Wärmedämmung notwendig ist. Dabei ist vorgesehen, dass das Isoliermaterial vorzugsweise eine Dichte zwischen 20 bis 90 kg pro $m^3$, vorzugsweise zwischen 30 bis 70 kg pro $m^3$ und noch bevorzugter zwischen 40 bis 60 kg pro $m^3$ aufweist.

Der Kräuselindex $I_x$ ist ein Maß für die Intensität der Kräuselung. Der Kräuselindex eines Filter Tows wird durch einen Zugversuch (Zusammenhang Kraft/Dehnung) bestimmt. Er ist definiert als das Verhältnis aus der gestreckten Länge $L_2$ unter Prüflast minus der Ausgangslänge zur Ausgangslänge unter Vorlast $L_1$:

$$I_x = L_2 - L_1/L_1 * 100\ \%$$

Dabei beträgt die Prüflast 25 N und die Vorlast 2,5 N. Die Einspannlänge ist 250 mm. Der Kräuselindex wird im Zugversuch mit einer konstanten Dehngeschwindigkeit von 300 mm/min auf einem G02-Gerät der Fa. Borgwaldt GmbH, Hamburg, bestimmt. Pro Messung werden 10 Einzelmesswerte aufgenommen. Die Prüfung erfolgt unter Normklima: 20 °C und 60% relative Luftfeuchtigkeit (Die Messmethode zum Kräuselindex ist im Cable - Programm unter dem Button "Hilfe" beschrieben).

Gemäß Ausführungsformen der vorliegenden Erfindung liegt die auf den Gesamttiter bezogene Reißkraft und somit Festigkeit des Tow-Materiales, welches als Ausgangspunkt für das erfindungsgemäße Isoliermaterial ist, zwischen 6 bis 20 cN/tex und vorzugsweise zwischen 8 und 12 cN/tex beim gekräuselten Tow. Die Reißkraft/Festigkeit für ungekräuseltes oder auch nur schwach gekräuseltes Tow-Material kann bis 20 cN/tex gehen.

Bei dem erfindungsgemäßen Verfahren zum Herstellen des Isoliermateriales wird - nach dem Aufbauschen des bereitgestellten Tow-Materiales - ein Weichmacher eingesetzt, um die Celluloseacetatfilamente des aufgebauschten Tow-Materiales zu vernetzen. Hierbei ist es bevorzugt, wenn der Weichmacher für das Celluloseacetat biologisch abbaubar ist.

Optional kann auch ein Klebstoff zum Vernetzen der Celluloseacetatfilamente verwendet werden. In bevorzugter Weise ist der Klebstoff wasserlöslich und/oder biologisch abbaubar, wobei es insbesondere denkbar ist, wenn der Klebstoff ein Stärkeleim oder ein Polyvinylacetatleim aufweist.

Durch den Einsatz eines wasserlöslichen und/oder biologisch abbaubaren Klebstoffes wird erreicht, dass die dem biologischen Abbau vorrausgehende mechanische Zerkleinerung des Isoliermateriales erleichtert wird.

Versuche haben gezeigt, dass es bevorzugt ist, wenn das Isoliermaterial den Weichmacher für Celluloseacetat in einer Menge von 3 bis 20 Gew.-% bezogen auf die Masse der Celluloseacetatfilamente enthält. Bei 20 Gew.-% Weichmacher können weitgehend sebsttragende Hohlfaserblöcke erzielt werden.

Als Weichmacher für das Celluloseacetat wird gemäß Ausführungsformen der Erfindung bevorzugt Triacetin eingesetzt, jedoch können auch andere Weichmacher, wie beispielsweise Triethylenglykoldiacetat, verwendet werden.

Wie bereits angedeutet, kann die biologische Abbaubarkeit des Isoliermateriales insbesondere dadurch verbessert werden, indem die aus den Celluloseacetatfilamenten aufgebaute Röhrchenverbundstruktur des Isoliermateriales als Zusatzstoff eine stickstoffhaltige, organische Verbindung aufweist. Dabei ist es selbstverständlich auch denkbar, dass der Zusatzstoff aus mehreren stickstoffhaltigen, organischen Verbindungen, also aus einem Gemisch aus mehreren stickstoffhaltigen, organischen Verbindungen besteht.

Dieser Weiterbildung des erfindungsgemäßen Isoliermateriales liegt das Prinzip zu Grunde, dass bedingt durch den biologischen Abbau der stickstoffhaltigen, organischen Verbindung und die dabei entstehenden basischen Zersetzungsprodukte, auf der Oberfläche der aus Celluloseacetat geformten Röhrchenstruktur ein basisches (alkalisches) Milieu erzeugt wird, welches eine partielle Hydrolyse des Celluloseacetates bewirkt.

Unter einem Tow-Material im Sinne der vorliegenden Erfindung soll grundsätzlich ein Band aus einer Vielzahl von Celluloseacetatfilamenten und/oder Celluloseacetat-Stapelfasern verstanden werden. Unter einem Filament ist eine praktisch endlose Faser zu verstehen, und der Ausdruck "Stapelfaser" bedeutet eine Faser begrenzter Länge. Hierbei handelt es sich insbesondere um geschnittene Fasern mit typischen Längen zwischen 10 bis 60 mm. Derartige Stapelfaser eignen sich insbesondere zum Einblasen in Formen zum Verpressen zu Formteilen oder zum Einblasen in Gebäudehohlräumen wie Sparren.

Wenn wir das erfindungsgemäße Isoliermaterial in Gestalt von Isolationsmatten (insbesondere für den Einsatz in Dachsparren) vorliegt, ist es von Vorteil, dass dieses Isoliermaterial aus röhrchenförmigen Stapelfasern aus Celluloseacetat gebildet wird, wobei die Isoliermatten auch ein vernetztes aber eher lockeres, wenig dichtes aber dickes und rollbares Material sein können, welches optional ein- oder beidseitig kaschiert sein kann, z.B. mit Alufolie als Dampfsperre.

Unter Acetylzahl versteht man in Sinne der vorliegenden Erfindung den Anteil an gebundener Essigsäure im Celluloseacetat, und zwar ausgedrückt in Massen-Prozent.

Mit dem erfindungsgemäßen Isoliermaterial werden zusammengefasst verschiedene Vorteile erreicht. Zum einen eignet sich die aus Celluloseacetat geformte Röhrchenverbundstruktur für die Anwendung als Massenartikel, welches relativ preiswert hergestellt werden kann. Für das Isoliermaterial gemäß der Erfindung gilt ferner, dass es gegenüber bekannten Filtermaterialien eine Beschleunigung der Verrottungsgeschwindigkeit unter Umgebungseinflüssen zeigt; dennoch ist der Einsatz des Isoliermateriales als Dämmmaterial unter den heute üblichen Bedingungen ohne die Gefahr des mikrobiologischen Abbaus ohne weiteres möglich. Gemäß Ausführungsformen der vorliegenden Erfindung wird nicht nur eine Beschleunigung der mechanischen Zerkleinerung der aus Celluloseacetat geformten Röhrchenverbundstruktur - durch den mikrobiologischen Abbau des optional vorgesehenen Zusatzstoffes - erreicht, sondern auch eine Beschleunigung des mikrobiologischen Abbaus des Celluloseacetates selbst.

Die Herstellung der rohrförmigen Celluloseacetatfilamente erfolgt durch im Wesentlichen Erspinnen von Celluloseacetatfilamenten durch Pressen einer Lösung von Celluloseacetat in Aceton durch eine Spinndüse mit mehreren Öffnungen und gegebenenfalls anschließendes Zerschneiden der Celluloseacetatfilamente zu Celluloseacetatspinnfasern, und Zusammenfassen einer Vielzahl der so erhaltenen Celluloseacetatfilamente und/oder Celluloseacetatspinnfasern zu einem Tow-Material.

Um zu erreichen, dass der Zusatzstoff (d.h. die optional zugegebene stickstoffhaltige, organische Verbindung und/oder Flammschutzmittel) in den Celluloseacetatfilamenten und in den Celluloseacetatspinnfasern vorhanden ist, kann dieser Zusatzstoff in die zuvor genannte Lösung von Celluloseacetat in Aceton eingegeben werden, wonach diese Versponnen wird.

Um zu erreichen, dass der Zusatzstoff, d.h. die optional zugegebene stickstoffhaltige, organische Verbindung und/oder die Flammschutzmittel, auf der Oberfläche der Celluloseacetatfilamente und der Celluloseacetatspinnfasern vorhanden ist, kann dieser Zusatzstoff während der Herstellung des Tow-Materiales, aber nach der Bildung der Celluloseacetatfilamente auf diese Filamente oder auf die daraus gebildeten Celluloseacetatspinnfasern aufgebracht werden. Beispielsweise kann der Zusatzstoff unmittelbar vor dem Zerschneiden der Celluloseacetatfilamente zu Celluloseacetatspinnfasern auf die Filamente aufgebracht werden, oder der Zusatzstoff kann auf das fertige Tow-Material, also nach dem Zusammenfassen der Celluloseacetatfilamente und/oder Celluloseacetatspinnfasern zu einem Tow-Material auf die Filamente und/oder Spinnfasern aufgebracht werden.

Alternativ oder zusätzlich hierzu kommt als Zusatzstoff ein Zusatzstoff zur Hydrophobisierung zum Einsatz. Auf diese Weise kann dem Effekt entgegengewirkt werden, dass (speziell geschnittene) Hohlfasern aufgrund ihrer Kapillarwirkung sehr empfindlich auf (Regen-) Wasser reagieren, was zum Zwecke einer thermischen Isolation nicht vorteilhaft ist. Von daher ist gemäß Realsierungen der erfindungsgemäßen Lösung vorgesehen, dass die Celluloseacetatfasern entweder schon im Spinnprozess mit Palmitinsäure oder Stearin wasserabweisend ausgerüstet werden. Grundsätzlich wäre es aber auch denkbar, dass dieser Auftrag nicht bereits beim Spinnen erfolgen, sondern eine spätere Imprägnierung der Fasern von außen stattfindet, was allerdings (wenn überhaupt) nur eine geringe Wirkung hätte, um die von den hohlen Fasern gebildete innere Kapillarwand hydrophob auszurüsten.

Um das bereitgestellte Tow-Material, welches gegebenenfalls den optional vorgesehenen Zusatzstoff aufweist, aufzubauschen, kommt gemäß Realisierungen der vorliegenden Erfindung ein so genanntes Aufbereitungsgerät zum Einsatz, welches ein Walzenpaar zum fortlaufenden Abziehen eines endlosen Tow-Materialstreifens von einem Tow-Ballen aufweisen kann. Nach der Entnahme von dem Tow-Ballen passiert der Tow-Streifen auf seinem Weg zum Walzenpaar, auf dem er über eine Umlenkrolle geführt ist, zwei Luftdüsen, die zur Ausbreitung und Auflockerung des Gewebes des Tow-Streifens dienen. Dem Walzenpaar folgen weitere Walzenpaare, zwischen denen sich eine Auftragseinrichtung zum Aufbringen von Weichmacher auf den zwischen den Walzenpaaren ausgebreiteten, geführten Tow-Streifen befindet.

Selbstverständlich sind auch andere Verfahren zum Aufbauschen des Tow-Materiales denkbar. Insbesondere kann das Aufbauschen auch mit Druckluft erfolgen.

Die Erfindung betrifft nicht nur das optimierte Isoliermaterial, sondern auch die Verwendung des Isoliermaterials in Gestalt von loser Stopfwolle aus Endlosfasern, oder in Gestalt von Dämmmaterial-Matten, oder in Gestalt von einblasbaren Stapelfasern oder in Gestalt eines Blockmaterials bei einem Konstruktionselement in Gestalt eines insbesondere sandwichartig aufgebauten Dämmpaneels oder einer insbesondere sandwichartig aufgebauten Fassadenplatte, wobei das Konstruktionselement eine Dämmschicht aus dem erfindungsgemäßen Isoliermaterial aufweist. Gemäß Ausführungsformen weist das Konstruktionselement ferner eine erste und eine zweite Deckplatte jeweils aus einem relativ zu dem Material der Dämmschicht, harten Material auf, wobei die bei den Deckplatten jeweils über die Dämmschicht miteinander verbunden, insbesondere stoffschlüssig verbunden sind.

Beispielsweise ist es in diesem Zusammenhang denkbar, wenn die Deckplatten aus Metall oder einem Metall-Sandwich gebildet sind; selbstverständlich kommen aber auch andere Materialien in Frage, wie etwa Gips-Karton-Platten, Zement gebundene Platten, Naturstein oder Ornamentplatten.

Ferner ist gemäß Ausführungsformen des Konstruktionselements vorgesehen, dass dieses ferner ein Laibungsprofil aufweist, um die Dämmschicht zu umgeben und/oder die Deckplatten miteinander zu verbinden.

**Patentansprüche**

1. Isoliermaterial insbesondere in Gestalt von Matten, die mit oder ohne Kaschierung beispielsweise zwischen Dachsparren eingesetzt werden können, oder in Gestalt von Stopfwolle bzw. in Gestalt von geschnittenen Stapelfasern zum Einblasen in Formen oder Hohlräume, wobei das Isoliermaterial als Röhrchenverbundstruktur ausgeführt ist, die rohrförmige Endlos-Celluloseacetatfilamente und/oder rohrförmige und geschnittene Endlos-Celluloseacetatfilamente aufweist,
**dadurch gekennzeichnet, dass**
der Filament-Aussendurchmesser der Celluloseacetatfilamente in einem Bereich zwischen 50 bis 150 μm, und vorzugsweise in einem Bereich zwischen 60 bis 100 μm liegt.

2. Isoliermaterial nach Anspruch 1,
wobei die Röhrchenverbundstruktur rohrförmige und gekräuselte Endlos-Celluloseacetatfilamente und/oder rohrförmige, gekräuselte und geschnittene Endlos-Celluloseacetatfilamente aufweist.

3. Isoliermaterial nach Anspruch 2,
wobei der Kräuselindex der Celluloseacetatfilamente zwischen 0 % und 40 %, insbesondere zwischen 10 % und 40 % und vorzugsweise zwischen 20 % und 30 % liegt.

4. Isoliermaterial nach einem der Ansprüche 1 bis 3,
wobei die rohrförmigen Celluloseacetatfilamente mit gegenseitigen Abständen in ungeregelter Anordnung zueinanderstehen, und wobei die Celluloseacetatfilamente vernetzt sind, wobei die verbindenden Celluloseacetatfilamente gegenseitig verschlauft und/oder verhakt sind.

5. Isoliermaterial nach einem der Ansprüche 1 bis 4,
wobei die Celluloseacetatfilamente eine Feinheit zwischen 10 bis 30 Denier und vorzugsweise eine Feinheit zwischen zwischen 15 bis 20 Denier aufweisen.

6. Isoliermaterial nach einem der Ansprüche 1 bis 5,
wobei das Isoliermaterial eine Dichte zwischen 20 bis 90 kg/m$^3$, vorzugsweise zwischen 30 und 70 kg/m$^3$ und noch bevorzugter zwischen 40 bis 60 kg/m$^3$ aufweist.

7. Isoliermaterial nach einem der Ansprüche 1 bis 6,
wobei der Hohlanteil in der Röhrchenverbundstruktur 25 % bis 90 % und vorzugsweise 50 % bis 80 % beträgt.

8. Isoliermaterial nach einem der Ansprüche 1 bis 7,
wobei ferner ein Binder, insbesondere ein organischer oder anorganischer Binder vorgesehen ist zum Zusammenhalten der Celluloseacetatfilamente.

9. Verfahren zum Herstellen eines Isoliermaterials, wobei es sich bei dem Isoliermaterial um ein Isoliermaterial nach einem der Ansprüche 1 bis 8 handelt, und wobei das Verfahren die folgenden Verfahrensschritte aufweist:

- Bereitstellen eines Tow-Materials aus gekräuselten Endlos-Celluloseacetatfilamenten;
- Aufbauschen des bereitgestellten Tow-Materials;
- Vernetzen der Celluloseacetatfilamente des Aufgebauschten Tow-Materials mit Hilfe eines Weichmachers, insbesondere Triacetin; und
- Ausformen von Faserblöcken aus dem vernetzten Tow-Materials.

10. Verfahren nach Anspruch 9,
wobei zum Vernetzten der Celluloseacetatfilamente das aufgebauschte Tow-Material mit dem Weichmacher, insbesondere Triacetin, benetzt wird, und wobei anschließend das benetzte Tow-Material in Formen gefüllt wird.

11. Verfahren nach Anspruch 9 oder 10,
wobei zum Bereitstellen des Tow-Materials die Celluloseacetatfasern im Spinnprozess mit Palmitinsäure oder Stearin wasserabweisend ausgerüstet werden.

12. Verwendung des Isoliermaterials nach einem der Ansprüche 1 bis 8 als Isoliermaterial in Gestalt von Matten, die mit oder ohne Kaschierung beispielsweise zwischen Dachsparren eingesetzt werden können, oder in Gestalt von Stopfwolle bzw. in Gestalt von geschnittenen Stapelfasern zum Einblasen in Formen oder Hohlräume.

**Claims**

1. An insulation material, particularly in the form of matting able to be used with or without lamination, for example between rafters, or in the form of stuffing wool or the form of cut staple fibers for blowing into molds or cavities, wherein the insulation material is implemented as a tubular composite structure comprising tubular continuous cellulose acetate filaments and/or tubular and cut continuous cellulose acetate filaments,
**characterized in that**
the outer filament diameter of the cellulose acetate filaments is in a range of between 50 to 150 μm, and preferably in a range of between 60 to 100 μm.

2. The insulation material according to claim 1,
wherein the tubular composite structure comprises tubular and crimped continuous cellulose acetate filaments and/or tubular, crimped and cut continuous cellulose acetate filaments.

3. The insulation material according to claim 2,
wherein the crimp index of the cellulose acetate filaments is between 0% and 40%, in particular between 10% and 40%, and preferably between 20% and 30%.

4. The insulation material according to one of claims 1 to 3,
wherein the tubular cellulose acetate filaments are spaced apart from each other in an irregular arrangement, and wherein the cellulose acetate filaments are crosslinked, wherein the connective cellulose acetate filaments are interlinked and/or interlocked with one another.

5. The insulation material according to one of claims 1 to 4,
wherein the cellulose acetate filaments have a linear density of between 10 to 30 denier and preferably a linear density of between 15 to 20 denier.

6. The insulation material according to one of claims 1 to 5,
wherein the insulation material has a density of between 20 to 90 kg/m3, preferably between 30 and 70 kg/m3, and more preferentially of between 40 to 60 kg/m3.

7. The insulation material according to one of claims 1 to 6,
wherein the hollow ratio in the tubular composite structure amounts to 25% to 90%, and preferably 50% to 80%.

8. The insulation material according to one of claims 1 to 7,
wherein a binder, in particular an organic or inorganic binder, is further provided to bind the cellulose acetate filaments together.

9. A method for producing an insulation material, wherein the insulation material is an insulation material according to one of claims 1 to 8, and wherein the method comprises the following method steps:

- providing a tow material of crimped continuous cellulose acetate filaments;
- fluffing the provided tow material;
- crosslinking the cellulose acetate filaments of the fluffed tow material using a plasticizer, in particular triacetin; and
- forming fiber blocks from the crosslinked tow material.

10. The method according to claim 9,
wherein to crosslink the cellulose acetate filaments, the fluffed tow material is wetted with the plasticizer, in particular triacetin, and wherein the wetted tow material is then filled into molds.

11. The method according to claim 9 or 10,
wherein to provide the tow material, the cellulose acetate fibers are made water-repellent with palmitic acid or stearin in the spinning process.

12. Use of the insulation material according to one of claims 1 to 8 as insulation material in the form of matting able to be used with or without lamination, for example between rafters, or in the form of stuffing wool or the form of cut staple fibers for blowing into molds or cavities.

**Revendications**

1. Matériau isolant, en particulier sous forme de nattes qui peuvent être utilisées avec ou sans contre-collage, par exemple entre les chevrons d'un toit, ou sous forme de laine de bourrage ou sous forme de fibres discontinues coupées destinées à être soufflées dans des moules ou des cavités, le matériau isolant étant réalisé sous la forme d'une structure composite à tubes qui présente des filaments d'acétate de cellulose continus tubulaires et/ou des filaments d'acétate de cellulose continus tubulaires et coupés,
**caractérsé en ce que**
le diamètre extérieur des filaments d'acétate de cellulose se situe dans une plage comprise entre 50 et 150 μm, et de préférence dans une plage comprise entre 60 et 100 μm.

2. Matériau isolant selon la revendication 1,
dans lequel la structure composite à tubes comprend des filaments d'acétate de cellulose continus tubulaires et frisés et/ou des filaments d'acétate de cellulose continus tubulaires, frisés et coupés.

3. Matériau isolant selon la revendication 2,
dans lequel l'indice de frisure des filaments d'acétate de cellulose est compris entre 0 % et 40 %, en particulier entre 10 % et 40 % et de préférence entre 20 % et 30 %.

4. Matériau isolant selon l'une des revendications 1 à 3,
dans lequel les filaments d'acétate de cellulose tubulaires sont espacés les uns des autres de manière non régulée, et les filaments d'acétate de cellulose sont réticulés, les filaments d'acétate de cellulose de liaison étant entrelacés et/ou accrochés les uns aux autres.

5. Matériau isolant selon l'une des revendications 1 à 4,
dans lequel les filaments d'acétate de cellulose ont une finesse comprise entre 10 et 30 deniers et de préférence une finesse comprise entre 15 et 20 deniers.

6. Matériau isolant selon l'une des revendications 1 à 5,
dans lequel le matériau isolant présente une masse volumique comprise entre 20 et 90 kg/m3, de préférence entre 30 et 70 kg/m3 et de manière particulièrement préférée entre 40 et 60 kg/m3.

7. Matériau isolant selon l'une des revendications 1 à 6,

dans lequel le taux de vide dans la structure composite à tubes est de 25 % à 90 % et de préférence de 50 % à 80 %.

8. Matériau isolant selon l'une des revendications 1 à 7, dans lequel est en outre prévu un liant, en particulier un liant organique ou inorganique, pour maintenir ensemble les filaments d'acétate de cellulose.

9. Procédé de fabrication d'un matériau isolant, le matériau isolant étant un matériau isolant selon l'une des revendications 1 à 8, le procédé comprenant les étapes suivantes consistant à :

   - fournir un matériau d'étoupe constitué de filaments d'acétate de cellulose continus frisés ;
   - crêper le matériau d'étoupe fourni ;
   - réticuler les filaments d'acétate de cellulose du matériau d'étoupe crêpé à l'aide d'un plastifiant, en particulier de la triacétine ; et
   - former des blocs de fibres à partir du matériau d'étoupe réticulé.

10. Procédé selon la revendication 9, dans lequel, pour réticuler les filaments d'acétate de cellulose, le matériau d'étoupe crêpé est mouillé avec le plastifiant, en particulier la triacétine, et ensuite le matériau d'étoupe mouillé est versé dans des moules.

11. Procédé selon la revendication 9 ou 10, dans lequel, pour fournir le matériau d'étoupe, les fibres d'acétate de cellulose sont rendues hydrofuges par de l'acide palmitique ou de la stéarine au cours du processus de filage.

12. Utilisation du matériau isolant selon l'une des revendications 1 à 8 en tant que matériau isolant sous forme de nattes, qui peuvent être utilisées avec ou sans contre-collage, par exemple entre les chevrons d'un toit, ou sous forme de laine de bourrage ou sous forme de fibres discontinues coupées destinées à être soufflées dans des moules ou des cavités.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1876130 A
- US 3044914 A
- DE 202004004228 U1
- EP 0634113 A2
- WO 2004009929 A1